# EUROPÄISCHE PATENTSCHRIFT

(11) **EP 0 647 803 B1**
(45) Veröffentlichungstag und Bekanntmachung des Hinweises auf die Patenterteilung: **07.01.1998**
(21) Anmeldenummer: 94113495.9
(22) Anmeldetag: 30.08.1994
(51) Int. Cl.: F16J 3/04, F16L 37/088

(54) **Steckkupplung für Druckmittelsysteme**
Plug coupling for pressure fluid system
Raccord emboîtable pour un système à fluide sous pression

(30) Priorität: 07.10.1993 DE 4334170
(43) Veröffentlichungstag der Anmeldung: 12.04.1995
(73) Patentinhaber: ARMATURENFABRIK HERMANN VOSS GMBH & CO., D-51688 Wipperfürth (DE)
(72) Erfinder: Goller, Bernd, D-51688 Wipperfürth (DE)
(74) Vertreter: Patentanwälte Dr. Solf & Zapf

(56) Entgegenhaltungen:
- EP-A- 0 005 865
- EP-A- 0 506 125
- DE-A- 2 055 181
- DE-U- 8 606 353
- US-A- 5 096 206

## Beschreibung

Die vorliegende Erfindung betrifft eine Steckkupplung für Druckmittelsysteme, insbesondere für Druckluft-Bremssysteme, bestehend aus einem Gehäuseteil und einem in eine Stecköffnung des Gehäuseteils dichtend einsteckbaren Steckerteil, wobei eine äußere Abdichtung gegen Eindringen von Schmutz, Feuchtigkeit und dergleichen vorgesehen ist.

Eine derartige Steckkupplung ist beispielsweise aus der EP-A-0 005 865 bekannt. Sie hat sich im praktischen Einsatz gut bewährt, allerdings sind die bekannten Maßnahmen zur Abdichtung nach außen gegen Eindringen von Schmutz, Feuchtigkeit (Spritzwasser) und dergleichen in mancher Hinsicht noch nicht optimal. In einigen der bekannten Ausführungsformen ist hierzu im Ringspaltbereich radial zwischen dem Steckerteil und der Stecköffnung des Gehäuseteils ein Dichtring angeordnet, wodurch aber - insbesondere bei wiederholter Montage und Demontage sowie durch eine grundsätzlich zulässige, geringfügige axiale Beweglichkeit des Steckerteils im Gehäuseteil - ein Eindringen von Schmutz und dergleichen in den Ringspaltbereich nicht ganz ausgeschlossen ist. In einer anderen der bekannten Ausführungsformen ist axial zwischen dem Gehäuseteil und einem äußeren Ringbund des Steckerteils ein elastischer Dichtring unter Vorspannung angeordnet, der hierdurch zusätzlich auch eine axiale Federkraft in Löserichtung erzeugen soll.

Aus der EP-A-0 506 125 Al ist des weiteren eine staubdichte Manschette als kappenartiges Dichtungselement zur Herstellung einer staubdichten Verbindung zwischen einer Halterung und einem in eine Führungsöffnung der Halterung eingeführten Stift (Steckerteil) einer Scheibenbremse bekannt. Die Manschette ist aus elastischem Material hergestellt und als Hülse mit einem expandierbaren Balgbereich ausgebildet, wobei ein erstes Ende mit einem Eingriffsring zum Eingriff mit dem Stift und ein zweites Ende mit einem inneren Eingriffsring für den Inneneingriff mit der Führungsöffnung sowie mit einem äußeren Eingriffsring für den Außeneingriff mit der Halterung ausgebildet sind. Die Manschette ist in einen sich zu dem inneren Eingriffsring erstreckenden inneren Zweigbereich und in einen sich zu dem äußeren Eingriffsring erstreckenden äußeren Zweigbereich verzweigt, und der innere Zweigbereich weist wenigstens eine Luftdurchlaßöffnung auf, die ein Durchströmen von Druckluft von innerhalb des Balgbereichs zum Auseinanderspreizen des äußeren Eingriffsrings ermöglicht, wenn während des Anbringvorgangs der Manschette an der Halterung ein Raum gebildet wird, der durch den inneren Zweigbereich, den äußeren Zweigbereich und den sich zwischen dem inneren Eingriffsring und dem äußeren Eingriffsring befindlichen Teil der Halterung begrenzt ist.

Der vorliegenden Erfindung liegt die Aufgabe zugrunde, ausgehend von einer Steckkupplung der gattungsgemäßen Art die äußere Abdichtung mit einfachen und preiswerten Mitteln weiter zu verbessern.

Erfindungsgemäß wird dies dadurch erreicht, daß die äußere Abdichtung als ein kappenartiges Dichtungselement mit einem inneren, mit dem Steckerteil umfänglich im wesentlichen dicht verbindbaren Ringteil, einem äußeren, mit dem Gehäuseteil umfänglich im wesentlichen dicht verbindbaren Ringteil sowie einem hüllenartigen, die beiden Ringteile miteinander verbindenden, flexiblen Mittelteil ausgebildet ist, daß der innere Ringteil des Dichtungselementes über eine schnappbare, umfänglich geschlossene Form- oder Kraftformschlußverbindung mit dem Steckerteil verbindbar ist, daß der hüllenartige Mittelteil des Dichtungselementes derart flexibel und elastisch ausgebildet ist, daß der innere und der äußere Ringteil in axialer Richtung und auch in radialer Richtung relativ zueinander beweglich sind, wobei der innere Ringteil über einen Abschnitt des eingesteckten Steckerteils beim Einsteckvorgang elastisch aufweitbar und in eine sich axial an den Abschnitt anschließende Außenringnut des Steckerteils einrastbar ist.

Somit wird der Ringspalt-Bereich zwischen dem Steckerteil und dem Gehäuseteil von außen gänzlich abgedeckt bzw. überdeckt, wobei die Ringteile "im wesentlichen dicht", d.h. zumindest staubdicht und feuchtigkeitsdicht (spritzwasserdicht), mit dem Steckerteil einerseits und dem Gehäuseteil andererseits verbunden sind. Der hüllenartige Mittelteil ist mit jedem der beiden Ringteile umfangsgemäß insbesondere einstückig und daher ebenfalls dicht verbunden. Das Dichtungsteil wird dabei vorteilhafterweise während des Einsteckvorganges des Steckerteiles in seine Abdichtstellung gebracht. Für eine einfache Montage ist es besonders vorteilhaft, wenn beide Ringteile jeweils über eine schnappbare Form- oder Kraftformschlußverbindung mit dem Stecker - bzw. Gehäuseteil verbindbar sind. Die flexible, vorzugsweise auch elastische Ausbildung des Mittelteils, derart, daß zumindest geringfügige Relativbewegungen zwischen den Ringteilen - und damit auch zwischen dem Steckerteil und dem Gehäuseteil - insbesondere in axialer Richtung, vorzugsweise aber auch in radialer Richtung, möglich sind, ist besonders vorteilhaft in Verbindung mit einer speziellen Ausgestaltung der Steckkupplung, wonach das` Steckerteil über einen im Gehäuseteil gelagerten, radialelastischen Haltering arretierbar ist und in der arretierten Lage noch Axialbewegungen des Steckerteils im Gehäuseteil möglich sind. Diese Axialbewegungen können von dem erfindungsgemäßen Dichtungselement aufgrund der Flexibilität des Mittelteils vorteilhafterweise unter Aufrechterhaltung der vollen Dichtwirkung ohne weiteres nachvollzogen werden.

Da das erfindungsgemäße Dichtungselement vorzugsweise als einstückiges Kunststoffteil ausgebildet ist, ist es auch einfach und preiswert herstellbar.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels einer erfindungsgemäßen Steckkupplung soll im folgenden die Erfindung näher erläutert werden. Dabei zeigen:
- Fig. 1: einen Halb-Axialschnitt durch eine erfindungsgemäße Steckkupplung während des Einsteckens des Steckerteils vor dessen Arretierung und
- Fig. 2: eine Darstellung analog zu Fig. 1 im eingesteckten und arretierten Zustand des Steckerteils.

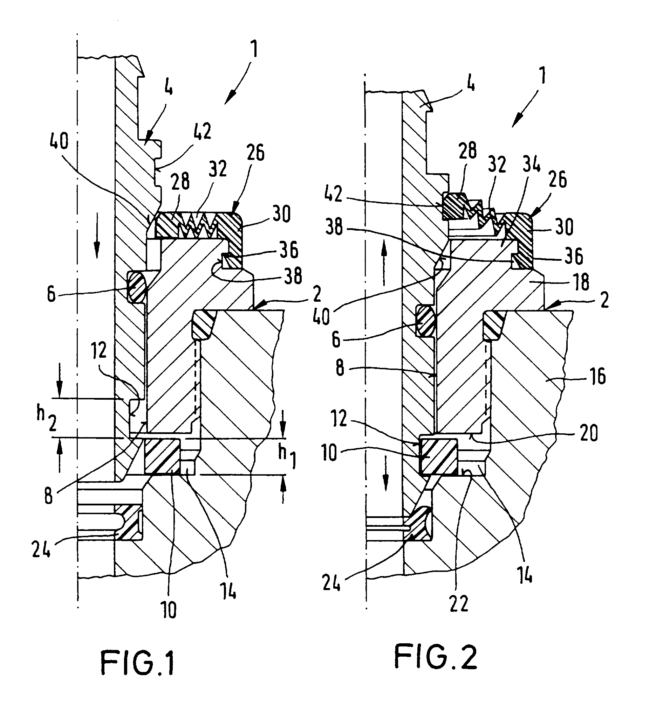

Wie sich aus beiden Zeichnungsfiguren ergibt, besteht eine erfindungsgemäße Steckkupplung 1 aus einem Gehäuseteil 2 (Muffenteil) und einem Steckerteil 4, welches umfänglich über einen Dichtring 6 abgedichtet ("innere" Abdichtung gegen den Systemdruck) in eine Stecköffnung 8 des Gehäuseteils 2 einsteckbar ist. Die konstruktive Ausgestaltung des Gehäuseteils 2 und des Steckerteils 4 ist grundsätzlich beliebig. Allerdings handelt es sich vorzugsweise um eine Ausführungsform, wie sie auch in der eingangs erwähnten EP-A-0 005 865 enthalten ist, auf die an dieser Stelle in vollem Umfang Bezug genommen wird. Es handelt sich hierbei darum, daß das Steckerteil 4 in der Stecköffnung 8 des Gehäuseteils 2 über einen geschlitzten, radialelastischen Haltering 10 arretierbar ist. Hierzu besitzt das Steckerteil 4 in seinem in die Stecköffnung 8 einzusteckenden Bereich eine umfängliche Außenringnut 12, und im Bereich der Stecköffnung 8 des Gehäuseteils 2 ist eine innere, ringnutförmige Aufnahmekammer 14 für den Haltering 10 gebildet. In der Arretierstellung des Steckerteils 4 - siehe Fig. 2 - sitzt der Haltering 10 mit seinem äußeren Umfangsbereich in der Aufnahmekammer 14 und greift mit seinem inneren Umfangsbereich in die Außenringnut 12 des Steckerteils 4 ein. Hierdurch ist das Steckerteil 4 in axialer Richtung formschlüssig fixiert. Um dennoch eine Lösbarkeit des Steckerteils 4 zu gewährleisten, ist das Gehäuseteil 2 zweiteilig ausgebildet, und zwar besteht es aus einem äußeren Anschlußkörper 16 und einem in ein Innengewinde des Anschlußkörpers 16 eingeschraubten bzw. einschraubbaren Einschraubkörper 18 (Überwurfschraube), wobei die Aufnahmekammer 14 axial zwischen einer Stirnringfläche 20 des Einschraubkörpers 18 und einer Ringstufenfläche 22 des Anschlußkörpers 16 gebildet ist. Somit kann nach Herausschrauben des Einschraubkörpers 18 das Steckerteil 4 zusammen mit dem Haltering 10 entnommen werden. Wie in Fig. 1 eingezeichnet ist, ist hierbei die in axialer Richtung gemessene Dicke bzw. Höhe h₁ des Halteringes 10 kleiner als die in axialer Richtung gemessene Breite bzw. Höhe h₂ der Außenringnut 12 des Steckerteils 4. Hierdurch sind auch in der arretierten Lage geringfügige Axialbewegungen des Steckerteils 4 innerhalb des Gehäuseteils 2 möglich. Hierbei ist zwischen dem Gehäuseteil 2 und dem Steckerteil 4, und zwar - wie dargestellt - insbesondere auf der Seite des in die Stecköffnung 8 eingesteckten Endes des Steckerteils 4, ein Federelement 24 angeordnet, welches das Steckerteil 4 in seinem arretierten Zustand in Löserichtung mit einer axial gerichteten Federkraft beaufschlagt. Im dargestellten Ausführungsbeispiel ist das Federelement 24 als Profilring aus einem elastischen Material ausgebildet, es kann jedoch ohne weiteres beispielsweise auch eine Tellerfeder oder dergleichen verwendet werden. Die dargestellte Ausführung hat jedoch den Vorteil, daß das Federelement 24 zusätzlich auch eine Druckabdichtungsfunktion hat.

Erfindungsgemäß ist nun zur "äußeren" Abdichtung gegen ein Eindringen von Schmutz, Feuchtigkeit und dergleichen in den Ringspaltbereich zwischen dem Gehäuseteil 2 und dem Stekkerteil 4 ein kappenartiges Dichtungselement 26 vorgesehen, welches den Ringspaltbereich von außen überdeckt. Dies ist vor allem in Fig. 2 zu erkennen, wo der fertigmontierte Zustand dargestellt ist. Das erfindungsgemäße Dichtungselement 26 besteht nun aus einem inneren Ringteil 28, einem äußeren Ringteil 30 sowie einem hüllenartigen, mit jedem Ringteil umfänglich verbundenen und hierdurch die beiden Ringteile 28, 30 miteinander verbindenden, flexiblen Mittelteil 32. Vorzugsweise ist vor dem Einstecken des Stekkerteils 4 das Dichtungselement 26 bereits mit dem Gehäuseteil 2 verbunden, wozu der äußere Ringteil 30 mit dem Gehäuseteil 2 insbesondere über eine schnappbare, umfänglich geschlossene Form- oder Kraftformschlußverbindung verbunden ist. Hierzu übergreift der äußere Ringteil 30 einen axialen Halteabschnitt 34 des Gehäuseteils 2 bzw. des Einschraubkörpers 18 und greift mit einem inneren, d.h. radial nach innen weisenden, umfänglich durchgehenden Raststeg 36 in eine radial nach außen offene Außenringnut 38 des Gehäuseteils 2 bzw. des Einschraubkörpers 18 ein. Bedingt durch eine vorzugsweise vorgesehe, konische Schrägfläche des Raststeges 36 läßt sich der äußere Ringteil 30 sehr einfach auf den Halteabschnitt 34 aufstecken und so verrasten. Diese zweckmäßige Verbindungsart gewährleistet gleichzeitig auch eine hinreichende Abdichtung gegen ein Eindringen von Staub, Schmutz, Feuchtigkeit, Spritzwasser und dergleichen.

Beim Einstecken des Steckerteils 4 wird dieses nun durch den inneren Ringteil 28 hindurchgeführt, bis auch hier zweckmäßigerweise der innere Ringteil 28 über eine schnappbare, umfänglich geschlossene Form- oder Kraftformschlußverbindung mit dem Steckerteil 4 verbunden ist. Hierzu ist der innere Ringteil 28 über einen sich konisch erweiternden Abschnitt 40 des eingesteckten Steckerteils 4 bei dessen Einsteckvorgang elastisch aufweitbar, so daß er dann bei weitergehendem Einstecken in eine sich axial an den konischen Abschnitt 40 anschließende Außenringnut 42 des Steckerteils 4 einrastet. Auch hier wird dieser Aufweitungsvorgang dadurch begünstigt, daß der innere Ringteil 28 eine mit dem konischen Abschnitt 40 des Steckerteils 4 zusammenwirkende, konische Schrägfläche aufweist, wie dies in der Zeichnung gut zu erkennen ist. Auch diese Verbindung zwischen dem Steckerteil 4 und dem inneren Ringteil 28 gewährleistet die angestrebte Dichtheit gegen von außen eindringende Fremdkörper bzw. Fremdstoffe.

Der hüllenartige Mittelteil 32 des erfindungsgemäßen Dichtungselementes 26 ist vorteilhafterweise derart flexibel und vorzugsweise auch elastisch ausgebildet, daß der innere und äußere Ringteil 28, 30 in axialer Richtung und vorzugsweise auch in radialer Richtung relativ zueinander beweglich sind. Dies ist insbesondere in Verbindung mit der bevorzugten Ausgestaltung der Steckkupplung 1 von Vorteil, da hierdurch das Dichtungselement 26 die Axialbeweglichkeit des Steckerteils 4 ohne weiteres zuläßt. Wie dargestellt ist der hüllenartige Mittelteil 32 bevorzugt nach Art eines Faltenbalges ausgebildet.

Zweckmäßigerweise ist das Dichtungselement 26 mit den beiden Ringteilen 28, 30 und dem Mittelteil 32 als einstückiges Formteil insbesondere aus Kunststoff hergestellt. Es liegt jedoch ebenfalls im Bereich der Erfindung, andere, gegebenenfalls lösbare umfängliche Verbindungen zwischen den Ringteilen und dem Mittelteil zu wählen. Es ist hier lediglich zu gewährleisten, daß auch diese Verbindungen zwischen den Ringteilen und dem Mittelteil jeweils "im wesentlichen dicht" gegen die angesprochenen Fremdstoffe bzw. Fremdkörper sind.

Die erfindungsgemäße Steckkupplung 1 ist nun - insbesondere bezüglich der Anordnung und Ausgestaltung der mit dem Haltering 10 arretierend zusammenwirkenden Außenringnut 12 einerseits und der mit dem inneren Ringteil 28 des Dichtungselementes 26 zusammenwirkenden Außenringnut 42 andererseits - derart ausgebildet, daß der Einsteckvorgang vorzugsweise wie folgt abläuft:

Beim Einstecken des Steckerteils 4 rastet zunächst der Haltering 10 in die entsprechende Außenringnut 12 ein. Das Steckerteil 4 kann dann - weil h₂ > h₁ - noch weiter axial eingesteckt werden, bis der innere Ringteil 28 in die ihm zugeordnete Außenringnut 42 einrastet. Diese über die eigentliche Arretierlage hinausgehende Einsteckbewegung des Steckerteils 4 erfolgt gegen die Federkraft des Federelementes 24, so daß es schließlich durch dieses Federelement 24 zu einer Rückbewegung des Steckerteils 4 kommt, und zwar unter Mitnahme des inneren Ringteils 28 und flexibler Verformung (Verlängerung) des Mittelteils 32. Dieser Vorgang ist anhand der beiden Zeichnungsfiguren leicht nachvollziehbar.

Erfindungsgemäß ist somit die Steckkupplung 1 so ausgelegt, daß das Dichtungselement 26 mit seinem inneren Ringteil 28 beim Einstecken des Steckerteils 4 frühestens beim Erreichen der Stecker-Einraststellung, d. h. wenn die Außenringnut 42 und der Haltering 10 in ihrer axialen Position übereinstimmen, in die Außenringnut 42 einrasten kann. Hierdurch kann vorteilhafterweise der Steckvorgang, d. h. das ordnungsgemäße Einrasten des Halteringes 10, von außen optisch anhand der Stellung des inneren Ringteils 28 des erfindungsgemäßen Dichtungselementes 26 kontrolliert werden; denn der innere Ringteil 28 kann nicht einrasten, bevor der Haltering 10 eingerastet ist. Dies bedeutet, daß ein noch nicht eingerasteter Ringteil 28 klaren Aufschluß darüber gibt, daß der Haltering 10 noch nicht ordnungsgemäß eingerastet ist, und wenn der Ringteil 28 eingerastet ist, muß zwangsläufig auch der Haltering 10 korrekt eingerastet sein. Diese vorteilhafte Maßnahme trägt somit zu einer hohen Sicherheit bei.

## Patentansprüche

1. Steckkupplung (1) für Druckmittelsysteme, insbesondere für Druckluft-Bremssysteme, bestehend aus einem Gehäuseteil (2) und einem in eine Stecköffnung (8) des Gehäuseteils (2) dichtend einsteckbaren Steckerteil (4), wobei eine äußere Abdichtung gegen Eindringen von Schmutz, Feuchtigkeit und dergleichen vorgesehen ist,
**dadurch gekennzeichnet**, daß die äußere Abdichtung als ein kappenartiges Dichtungselement (26) mit einem inneren, mit dem Steckerteil (4) umfänglich im wesentlichen dicht verbindbaren Ringteil (28), einem äußeren, mit dem Gehäuseteil (2) umfänglich im wesentlichen dicht verbindbaren Ringteil (30) sowie einem hüllenartigen, die beiden Ringteile (28, 30) miteinander verbindenden, flexiblen Mittelteil (32) ausgebildet ist, daß der innere Ringteil (28) des Dichtungselementes (26) über eine schnappbare, umfänglich geschlossene Form- oder Kraftformschlußverbindung mit dem Steckerteil (4) verbindbar ist, daß der hüllenartige Mittelteil (32) des Dichtungselementes (26) derart flexibel und elastisch ausgebildet ist, daß der innere und der äußere Ringteil (28, 30) in axialer Richtung und auch in radialer Richtung relativ zueinander beweglich sind, wobei der innere Ringteil (28) über einen Abschnitt (40) des eingesteckten Steckerteils (4) beim Einsteckvorgang elastisch aufweitbar und in eine sich axial an den Abschnitt (40) anschließende Außenringnut (42) des Steckerteils (4) einrastbar ist.

2. Steckkupplung nach Anspruch 1,
**dadurch gekennzeichnet**, daß der äußere Ringteil (30) des Dichtungselementes (26) mit dem Gehäuseteil (2) über eine schnappbare, umfänglich geschlossene Form- oder Kraftformschlußverbindung verbunden ist.

3. Steckkupplung nach Anspruch 1 oder 2,
**dadurch gekennzeichnet**, daß der äußere Ringteil (30) des Dichtungselementes (26) einen axialen Halteabschnitt (34) des Gehäuseteils (2) übergreift und mit einem inneren, umfänglich durchgehenden Raststeg (36) in eine Außenringnut (38) des Gehäuseteils (2) eingreift.

4. Steckkupplung nach einem oder mehreren der Ansprüche 1 bis 3,
**dadurch gekennzeichnet**, daß der Mittelteil (32) des Dichtungselementes (26) nach Art eines Faltenbalges ausgebildet ist.

5. Steckkupplung nach einem oder mehreren der Ansprüche 1 bis 4,
**dadurch gekennzeichnet**, daß das Dichtungselement (26) mit den beiden Ringteilen (28, 30) und dem Mittelteil (32) als einstückiges Formteil insbesondere aus Kunststoff ausgebildet ist.

6. Steckkupplung nach einem oder mehreren der Ansprüche 1 bis 5,
**dadurch gekennzeichnet**, daß das Steckerteil (4) in der Stecköffnung (8) des Gehäuseteils (2) über einen geschlitzten, radialelastischen Haltering (10) arretierbar ist.

7. Steckkupplung nach Anspruch 6,
**dadurch gekennzeichnet**, daß das Gehäuseteil (2) aus einem Anschlußkörper (16) und einem in diesen einschraubbaren Einschraubkörper (18) besteht, wobei zwischen dem Anschlußkörper (16) und dem Einschraubkörper (18) eine ringnutförmige Aufnahmekammer (14) für den Haltering (10) gebildet ist.

8. Steckkupplung nach einem oder mehreren der Ansprüche 1 bis 7,
**gekennzeichnet durch** ein zwischen dem Gehäuseteil (2) und dem Steckerteil (4) angeordnetes, das Steckerteil (4) in seinem arretierten Zustand in Löserichtung mit einer axial gerichteten Federkraft beaufschlagendes Federelement (24), wobei das Steckerteil (4) in seinem arretierten Zustand in axialer Richtung über einen bestimmten Weg beweglich ist.

9. Steckkupplung nach einem oder mehreren der Ansprüche 6 bis 8,
**dadurch gekennzeichnet**, daß eine mit dem Haltering (10) arretierend zusammenwirkende Außenringnut (12) des Steckerteils (4) einerseits und die mit dem inneren Ringteil (28) des Dichtungselementes (26) zusammenwirkende Außenringnut (42) des Steckerteils (4) andererseits derart angeordnet und ausgebildet sind, daß beim Einstecken des Steckerteils (4) zunächst der Haltering (10) in die entsprechende Außenringnut (12) einrastet, das Steckerteil (4) dann weiter axial einsteckbar ist, bis der innere Ringteil (28) in die ihm zugeordnete Außenringnut (42) einrastet, und schließlich das Steckerteil (4) - aufgrund der Wirkung des Federelementes (24) - axial unter Mitnahme des inneren Ringteils (28) und flexibler Verformung des Mittelteils (32) in Löserichtung zurück in seine Arretierstellung bewegt wird.

## Claims

1. Plug-in coupling (1) for pressure systems, in particular for compressed-air braking systems, comprising a housing part (2) and a plug part (4) which can be sealingly plugged into a plug-in opening (8) of the housing part (2), with provision for external sealing against penetration of dirt, moisture and the like, characterised in that the external sealing takes the form of a cap-like sealing element (26) having an inner annular part (28) connectable circumferentially in substantially sealed fashion to the plug part (4), an outer annular part (30) connectable circumferentially in substantially sealed fashion to the housing part (2), and an envelope-like flexible middle part (32) interconnecting the two annular parts (28, 30), in that the inner annular part (28) of the sealing element (26) is connectable to the plug part (4) by way of a snap-in, circumferentially closed positive-locking or frictional-locking connection, in that the envelope-like middle part (32) of the sealing element (26) is constructed with a flexibility and elasticity such that the inner and the outer annular part (28, 30) are movable in the axial direction and also in the radial direction relative to one another, it being possible for the inner annular part (28) to be resiliently widened by way of a portion (40) of the plugged-in plug part (4) during the plugging-in procedure and to latch into an outer annular groove (42) of the plug part (4) axially adjoining the portion (40).

2. Plug-in coupling according to Claim 1, characterised in that the outer annular part (30) of the sealing element (26) is connected to the housing part (2) by way of a snap-in, circumferentially closed positive-locking or frictional-locking connection.

3. Plug-in coupling according to Claim 1 or 2, characterised in that the outer annular part (30) of the sealing element (26) extends over an axial retaining portion (34) of the housing part (2) and engages, by an inner, circumferentially continuous latching web (36), in an outer annular groove (38) of the housing part (2).

4. Plug-in coupling according to one or more of Claims 1 to 3, characterised in that the middle part (32) of the sealing element (26) is constructed in the manner of a bellows.

5. Plug-in coupling according to one or more of Claims 1 to 4, characterised in that the sealing element (26) having the two annular parts (28, 30) and the middle part (32) is constructed as a one-piece moulding, in particular of plastics.

6. Plug-in coupling according to one or more of Claims 1 to 5, characterised in that the plug part (4) can be locked in the plug-in opening (8) of the housing part (2) by way of a slotted, radially resilient retaining ring (10).

7. Plug-in coupling according to Claim 6, characterised in that the housing part (2) comprises a joining body (16) and a screw-in body (18) capable of being screwed into the latter, an annular-groove-shaped receiving chamber (14) for the retaining ring (10) being formed between the joining body (16) and the screw-in body (18).

8. Plug-in coupling according to one or more of Claims 1 to 7, characterised by a spring element (24) arranged between the housing part (2) and the plug part (4) and acting upon the plug part (4), in its locked state, in the release direction with an axially directed spring force, the plug part (4) being movable, in its locked state, over a certain distance in the axial direction.

9. Plug-in coupling according to one or more of Claims 6 to 8, characterised in that an outer annular groove (12), cooperating in locking fashion with the retaining ring (10), of the plug part (4) on the one hand and the outer annular groove (42), cooperating with the inner annular part (28) of the sealing element (26), of the plug part (4) on the other hand are arranged and constructed in such a way that, on plugging in the plug part (4), first of all the holding ring (10) latches into the corresponding outer annular groove (12), then the plug part (4) can be pushed in further axially until the inner annular part (28) latches into the outer annular groove (42) assigned to it, and finally the plug part (4) - owing to the action of the spring element (24) - is moved axially back into its locking position in the release direction, taking the inner annular part (28) with it and flexibly deforming the middle part (32).

## Revendications

1. Connecteur à fiche (1) pour systèmes utilisant un agent de pression, en particulier pour systèmes de freinage à air comprimé, comprenant un élément de boîtier (2), et un élément de fiche (4) pouvant être enfiché de manière étanche dans une ouverture d'enfichage (8) de l'élément de boîtier (2), un moyen d'étanchéité extérieur étant prévu pour empêcher la pénétration de saletés, d'humidité et analogue,
caractérisé en ce que le moyen d'étanchéité extérieur est un élément d'étanchéité en forme de capot (26) comportant une portion annulaire interne (28) dont la périphérie peut être reliée à l'élément de fiche (4) de manière sensiblement étanche, et une portion annulaire externe (30) dont la périphérie peut être reliée à l'élément de boîtier (2) de manière sensiblement étanche, ainsi qu'une portion intermédiaire flexible en forme de manchon (32) qui relie les deux portions annulaires (28, 30), en ce que la portion annulaire interne (28) de l'élément d'étanchéité (26) peut être reliée à l'élément de fiche (4) par une connexion par la forme ou une connexion par la force et la forme encliquetable, fermée sur sa périphérie, que la portion intermédiaire (32) en forme de manchon de l'élément d'étanchéité (26) est souple et élastique, de manière à ce que les portions annulaires interne et externe (28, 30) soient mobiles l'une par rapport à l'autre dans la direction axiale, et également dans la direction radiale, la portion annulaire interne (28) pouvant être élastiquement élargie au cours de l'enfichage, grâce à une portion (40) de l'élément de fiche (4) enfiché, et pouvant se bloquer dans une rainure annulaire externe (42) de l'élément de fiche (4) qui prolonge axialement la portion (40).

2. Connecteur à fiche selon la revendication 1,
caractérisé en ce que la portion annulaire externe (30) de l'élément d'étanchéité (26) est reliée à l'élément de boîtier (2) par une connexion par la forme ou par la forme et la force encliquetable et fermée sur sa périphérie.

3. Connecteur à fiche selon la revendication 1 ou 2,
caractérisé en ce que la portion annulaire externe (30) de l'élément d'étanchéité (26) chevauche une section axiale de maintien (34) de l'élément de boîtier (2), et s'insère par une nervure d'arrêt (36) interne s'étendant sur toute la périphérie dans une rainure annulaire externe (38) de l'élément de boîtier (2).

4. Connecteur à fiche selon l'une ou plusieurs des revendications 1 à 3,
caractérisé en ce que la portion intermédiaire (32) de l'élément d'étanchéité (26) a été réalisée à la manière d'un soufflet d'intercirculation.

5. Connecteur à fiche selon l'une ou plusieurs des revendications 1 à 4,
caractérisé en ce que l'élément d'étanchéité (26) comportant les deux portions annulaires (28, 30) et la portion intermédiaire (32) a été réalisé sous la forme d'une seule pièce moulée, en particulier en une matière synthétique.

6. Connecteur à fiche selon l'une ou plusieurs des revendications 1 à 5,
caractérisé en ce que l'élément de fiche (4) peut être verrouillé dans l'ouverture d'enfichage (8) de l'élément de boîtier (2) par une bague de maintien (10) fendue, élastique dans la direction radiale.

7. Connecteur à fiche selon la revendication 6,
caractérisé en ce que l'élément de boîtier (2) consiste en un corps de connexion (16) et un corps de vissage (18) pouvant être vissé dans celui-ci, un logement (14) en forme de rainure annulaire pour accueillir la bague de maintien (10) étant formé entre le corps de connexion (16) et le corps de vissage (18).

8. Connecteur à fiche selon l'une ou plusieurs des revendications 1 à 7,
caractérisé par un élément de ressort (24) agencé entre l'élément de boîtier (2) et l'élément de fiche (4), et chargeant à l'état bloqué l'élément de fiche (4) dans la direction de desserrage d'une force élastique axiale, l'élément de fiche (4) étant mobile, à l'état bloqué, dans la direction axiale sur un trajet prédéterminé.

9. Connecteur à fiche selon l'une ou plusieurs des revendications 6 à 8,
caractérisé en ce que, d'une part, une rainure annulaire externe (12) de l'élément de fiche (4) qui coopère de manière bloquante avec la bague de maintien (10), et d'autre part, la rainure annulaire externe (42) de l'élément de fiche (4) qui coopère avec la portion annulaire interne (28) de l'élément d'étanchéité (26) sont agencées et formées de manière à ce que, lors de l'enfichage de l'élément de fiche (4), la bague de maintien (10) se bloque d'abord dans la rainure annulaire externe correspondante (12), que l'élément de fiche (4) puisse ensuite être enfiché plus loin dans la direction axiale, jusqu'à ce que la portion annulaire interne (28) se bloque dans la rainure annulaire externe associée (42), et qu'enfin, grâce à l'action de l'élément de ressort (24), l'élément de fiche (4) soit axialement déplacé dans la direction de desserrage, vers l'arrière, dans sa position de verrouillage en entraînant la portion annulaire interne (28) et en déformant élastiquement la portion intermédiaire (32).
